# EUROPEAN PATENT SPECIFICATION

(11) **EP 2 893 854 B1**
(45) Date of publication and mention of the grant of the patent: **30.11.2016**
(21) Application number: 14150718.6
(22) Date of filing: 10.01.2014
(51) Int. Cl.: A47J 27/21, H05B 6/12

(54) **Induction cooker**
Induktionskocher
Appareil de cuisson à induction

(43) Date of publication of application: 15.07.2015
(73) Proprietor: Electrolux Appliances Aktiebolag, 105 45 Stockholm (SE)
(72) Inventor: Eißner, Reinhold, 91541 Rothenburg ob der Tauber (DE); Wundling, Holger, 91541 Rothenburg ob der Tauber (DE); Matulla, Daniel, 91541 Rothenburg ob der Tauber (DE)
(74) Representative: Electrolux Group Patents

(56) References cited:
- EP-A1- 1 816 659
- EP-A2- 0 453 634
- DE-A1-102010 039 071
- US-A- 4 812 623

## Description

In the development of home appliances, at present there is a strong need to offer devices to the client that are easy to operate save time and use as few resources as possible, due to their limitations that become more and more visible over the world. Corresponding home appliances have a competitive advantage, if they are technologically advanced and save money during their operation, while using fewer energy which becomes more and more expensive. In general, induction hobs as a kitchen appliance are known in the art.

The document WO 2007/088209 A1 discloses an electrical domestic appliance system which comprises an appliance base and at least one wireless electrical domestic appliance which can be arranged removably on the appliance base, wherein the first electrical connection means are provided for transmitting electrical energy from the appliance base to the domestic appliance.

The invention is based on the problem to facilitate induction cooking, and in particular to improve the preservation of metallic surfaces of cooking vessels during the cooking process.

This problem is solved by an induction cooker according to claim 1.

Advantageous further developments of the invention are given in the dependent claims.

Advantageously, an induction cooker comprising a cooking vessel and a base element, wherein said base element has at least one induction element into which a current can be induced for supplying said induction cooker with electrical energy, wherein at least one conductive element is arranged between said base element and said cooking vessel which covers at least a part of said cooking vessel from oscillating magnetic fields.

In such a configuration, the cooking vessel can be protected from oscillating magnetic fields which are created from the power supply which is used to induce an induction current into said induction element. Thus, the cooking vessel can be protected from being warmed up by the oscillating magnetic fields. Such an induction cooker can be operated by placing it on an induction hob. No further cables are needed for power supply.

In an advantageous embodiment of the invention said at least one conductive element is a ring-shaped element.

A ring-shaped conductive element enables to protect the peripheral region of the cooking vessel, e.g. a circumferential wall. Thus, less material is necessary for such a conductive element.

Beneficially, in a further development of an embodiment of the induction cooker according to the present invention, the at least one conductive element is metallic, i.e. copper or aluminum or a metal with similar ohmic resistance, because in such a metallic ring element generated power losses during induction cooking are significantly smaller than in a stainless steel material that e.g. might be used in an induction cooking vessel. Beneficially, according to a further development of an embodiment of the induction cooker according to the present invention, a funnel is provided in order to favorably guide away spilled fluids from the induction cooking mechanism to a location that can be removed or collected.

In a further advantageous embodiment of the invention said cooking vessel is releasably supported upon said base element.

Thus, an induction cooker is created of two independent parts. A smaller weight of cooking vessel taken alone can be achieved.

Favorably, according to a further advantageous embodiment of the invention, the base element has a round shape, where the funnel fits inside of the conductive element and has at least one, preferably three, cut-outs at its outer circumference to allow easy removal of the funnel from the induction cooker for cleaning purposes or the like.

In a further advantageous embodiment of the invention said base element comprises an outer circumferential wall, wherein at least said funnel and said conductive element form a pre-fixed assembly with said outer wall, wherein a bottom cover of the base element can be attached to said pre-fixed assembly.

In such an embodiment mounting of the necessary components is facilitated, wherein the components can be placed in their proper positions relative to each other.

In a further advantageous embodiment said outer circumferential wall of the base element and/or said conductive element and/or said funnel are arranged concentrically relative to each other. In such an embodiment said conductive element can be arranged in a position, where it is particular effective. The cover of the base element which supports the induction element or coil, can be arranged concentrically, too, relative to the conductive element.

In a further advantageous embodiment of the invention an electrical component is provided which establishes an electric connection between said base element and said cooking vessel, in particular when said cooking vessel is in a supported position upon said base element, and/or in particular wherein said electrical component is a releasable electrical connector, preferably a contact switch.

Thus, the induction cooker can be operated only when said cooking vessel is placed properly upon said base element. Further, a reliable electrical connection can be provided between base element and cooking vessel.

Advantageously, according to a further development of an embodiment of the induction cooker according to the present invention, it comprises an electrical component between said base element and said cooking vessel, in particular when said cooking vessel is in a supported position upon said base element and/or in particular wherein said electrical component is a releasable electrical connector, preferably a contact switch.

In this manner, favorably either it can be detected if a cooking vessel is present on top of the base element, or electrical loads such as an operation-indicating light bulp can be supplied.

Favorably, according to a further development of an embodiment of the induction cooker according to the present invention, the electrical component is a switch, because in this manner a safer operation of the induction cooker can be facilitated.

Advantageously, according to a further development of an embodiment of the induction cooker according to the present invention, the electrical component is a connector, because in this manner the functionality of the induction cooker can be improved by providing control of the cooking process in gathering measurement information from the cooking vessel or providing indications on a display of the cooking vessel.

Advantageously, an induction cooking vessel according to an embodiment of the present invention comprises an outer wall made from conductive material and at least an electrical contact to cooperate with an induction cooker.

Favorably, according to a further embodiment of the invention said cooking vessel comprises a circumferential wall made from conductive material, in particular made from metal, preferably made from stainless steel. Stainless steel has a nice appearance and long-term durability. Discoloration of the stainless steel of the cooking vessel may occur, when the induction hob generates an oscillating magnetic field which induces a current not only in the induction element, but also into the wall of the cooking vessel. Thus, the cooking vessel is warmed up and may change its color due to the thermal load. Discoloration of the wall of the cooking vessel can be prevented in that way.

Advantageously, according to a further development of the induction cooker according to an embodiment of the present invention, the bottom material of the cooking vessel is made from non-conductive material, in particular from plastics, thus allowing magnetic waves to easily penetrate into the cooking vessel in order not to induce a current into the bottom of the cooking vessel and in order not to generate heat within the bottom of the cooking vessel.

Advantageously, said conductive element at least has a dimension to cover an outer contour of a bottom of said cooking vessel and/or where said conductive element at least has a dimension to cover an outer of said outer circumferential wall.

In such a configuration the circumferential wall is advantageously protected from said oscillating magnetic field.

Subsequently, the invention will be further explained on the basis of examples shown in drawings, wherein:
- Fig. 1: shows an induction cooker according to an embodiment of the present invention;
- Fig. 2: shows a partial view of a section through the induction cooker of Fig. 1; and
- Fig. 3: shows an induction cooking arrangement according to an embodiment of the present invention.

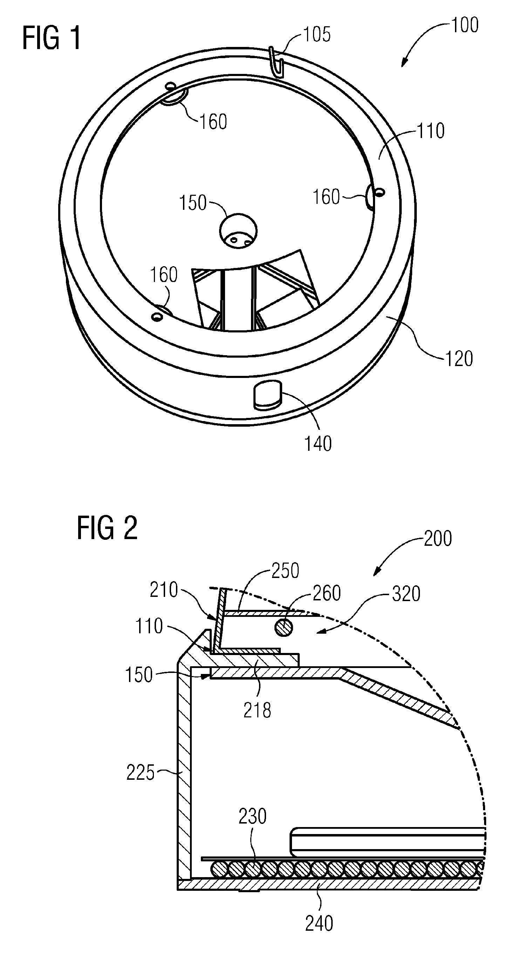

As Fig. 1 shows, a base element 100 with a body 120 according to an embodiment of the present invention having a conductive element 110 on a top surface e.g. at an outer periphery of an area that is intended to be covered by an induction cooking vessel. Advantageously the applicant has realized that the appearance of a metallic induction cooking vessel can be preserved and prevented from discoloration.

Inside of the conductive element 110 which advantageously is made from aluminum or copper as these metals in comparison to stainless steel that might be used in an induction cooking vessel induce significantly smaller power losses during an operation of an induction element.

Further shown is an electrical component 105 that enables an electric connection between the induction element 230 and the heating element 260 when the cooking vessel 305 is placed on the base element 100 in a proper operation position. In the case that said cooking vessel 305 is placed on the base element 100 in such way that the electric connection between induction element 230 and heating element 260 is established, the heating element 260 can be heated by means of current which is induced into the induction element 230. The induction element 230 is an induction coil.

By means of such an arrangement, an induction cooker is created which comprises said cooking vessel 305 and said base element 100. Said induction cooker can be placed on the surface of a conventional induction cooking hob. By conventionally operating said induction cooking hob, an induction current is induced into said induction element 230. Said induction current is transferred via electrical component 105 into said heating element 260, where said induction current is transformed into thermal energy. Water or any other liquid which is present within the interior of the cooking vessel 305 can be heated by said thermal energy.

Additionally, said electrical component 105 may serve to detect if the cooking vessel is present on the induction cooker or connect to a connector of an induction cooking vessel.

Further, Fig. 1 shows a funnel 150 below the conductive element 110 which has cut-outs 160 at its outer circumference.
The funnel 150 collects and drains liquid, e.g. condensed liquid, through tubes to the exterior of the base element 100 in order to protect the electric components which are arranged inside of the base element 100.

Beneficially, the induction cooker according to the embodiment of the present invention may be fabricated from plastic material and has a possibility to furnish it with an electrical component 140 such as a switch at its front side.

The funnel may be preferably equipped with a drainage hole in order to safely allow the removal of fluids that are spilled during the cooking process from the induction components of the base element 100.

As Fig. 2 shows, a partial view 200 is a section in a vertical direction through the base element 100 and cooking vessel 305 of Fig. 1. It shows an outer wall of an induction cooking vessel 210, a bottom 250 of an induction cooking vessel, a heating element 260 inside of the induction cooking vessel. Further, the funnel 150 is depicted to capture excess fluids as well as a support 218 for the cooking vessel.

When the cooking vessel 305 is supported on the body of the base element 120 in an assembled working situation, the bottom 250 is in plane contact with the conductive element 110. Further, the bottom 250 is distanced from the support for the cooking vessel 218. Alternatively or additionally, distance elements can be provided between the support for the cooking vessel 218 and the bottom 250 in order to position the bottom 250 in a certain distance from the support for the cooking vessel 218. Alternatively, the conductive element can have a dimensioned cross-section such that the support for the cooking vessel 218 and the bottom 250 are arranged in a certain distance to each other. In all possible cases it is preferred, that the distance between bottom 250 and the support for the cooking vessel 218 is between 10 mm and 30 mm, more preferably, the distance is ca. 20 mm.

The outside circumferential wall 225 of the induction cooker may be made of a plastic ring. In this manner the manufacturing of the induction cooker can be simplified. The bottom of the induction cooker according to this embodiment may comprise an induction element 230 which is covered by a cover 240, e.g. the cover 240 comprising a bottom plate also made of plastics.

It can be contemplated that such an induction cooker can be manufactured and assembled by putting the associated components into the housing of the induction cooker from below and then finally closing it with the cover 240.

Fig. 2 also shows a section of the conductive element 110 that may be made from aluminum or copper or any other material which has a similar Ohmic resistance. The magnetic field generated by the induction element 230 induces eddy currents into the metallic ring element and thus protects a stainless steel body of an induction cooking vessel from being heated on its outside wall and securely prevents discoloration of the side wall of an induction cooking vessel being made from stainless steel material.

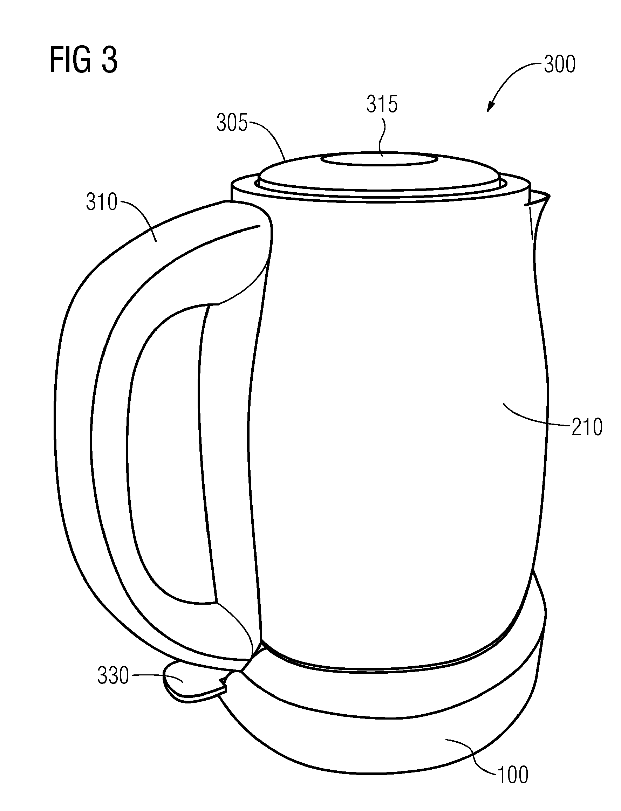

Fig. 3 shows an induction cooking arrangement 300 according to an embodiment of the present invention. It is preferably comprised of a base element 100 and an cooking vessel 305. The induction vessel is covered by a lid 315, has a handle 310 and a switch 330. A connector 235 may be provided at the induction cooking vessel. Also the outside wall of the induction cooking vessel 210 is shown as well as the conductive element 110 that it extends slightly over an outer diameter of the induction cooking vessel 305 and as a black line in the drawing, the bottom 230 of the induction cooking vessel is shown that may be made from plastic material in this case.

Here, the induction cooking arrangement may be representing a water kettle. Other food preparation vessels can be contemplated by a person skilled in the art from the teachings and the specification of the present invention.

In particular, with such a cooking arrangement 300, cooking control can be performed in a manner that a preset temperature of the fluid inside of the cooking vessel can be achieved and controlled, and once a sensor inside of the cooking vessel detects that this temperature has been reached, the induction element can be switched off and a signal can be provided to an operator.

In each embodiment of the invention, said sensor can be realized by means of an ascending pipe arranged within a heating chamber 320 of said cooking vessel 305. The ascending pipe includes a floating body which reacts on the amount of liquid or fluid, e.g. steam, within the ascending pipe. Amount of liquid or fluid in the ascending pipe increases due to an increasing temperature of the fluid to be heated in the cooking vessel 305. In the case that the floating body reaches a predetermined height or verticcal position, a signal can be given to the base element 100 which stops operation of the heating element 260.

In particular, some preparation methods of special teas or other food may require the water not to be boiling and thus can favorably be adapted by the cooking arrangement according to the present invention.

### List of reference numerals

- 100: base element
- 105: electrical component
- 110: conductive element
- 120: body of base element
- 140: electrical component
- 150: funnel with drainage hole
- 160: cut-out at the circumference of the funnel
- 200: partial view of a section through the induction cooker
- 210: circumferential wall of cooking vessel
- 218: support for cooking vessel
- 225: outer circumferential wall of base element
- 230: induction element
- 240: cover
- 250: bottom of cooking vessel
- 260: heating element
- 300: induction cooking arrangement
- 305: cooking vessel
- 310: handle
- 315: lid
- 320: heating chamber
- 330: switch

## Claims

1. Induction cooker comprising a cooking vessel (305) and a base element (100), wherein said base element (100) has at least one induction element (230) into which a current can be induced for supplying said induction cooker with electrical energy, wherein at least one conductive element (110) is arranged between said base element (100) and said cooking vessel (305) which covers at least a part of said cooking vessel (305) from oscillating magnetic fields.

2. Induction cooker according to claim 1, wherein said at least one conductive element (110) is a ring-shaped element.

3. Induction cooker according to any one of the preceding claims, wherein said at least one conductive element (110) is metallic, in particular made from copper or aluminum or a metal with similar ohmic resistance.

4. Induction cooker according to any one of the preceding claims, wherein said cooking vessel (305) is releasably supported upon said base element (100).

5. Induction cooker according to claim 4, wherein said base element (100) comprises a funnel (150) to drain a spilled fluid.

6. Induction cooker according to claim 4 or 5, wherein said base element (100) has a round shape wherein the funnel (150) fits inside said conductive element (110) and has at least one, preferably three, cut-outs (160) at its outer circumference.

7. Induction cooker according to any one of the preceding claims, wherein said base element (100) comprises an outer circumferential wall (225), wherein at least said funnel (150) and said conductive element (110) form a pre-fixed assembly with said outer wall, wherein a bottom cover (240) of the base element (100) can be attached to said pre-fixed assembly.

8. Induction cooker according to claim 7, wherein said outer circumferential wall (225) and/or said conductive element (110) and/or said funnel (150) are arranged concentrically relative to each other.

9. Induction cooker according to any one of the previous claims, further comprising an electrical component (105) which establishes an electric connection between said base element (100) and said cooking vessel (305), in particular when said cooking vessel (305) is in a supported position upon said base element (100), and/or in particular wherein said electrical component (105) is a releasable electrical connector, preferably a contact switch.

10. Induction cooker according to any one of the preceding claims, wherein said cooking vessel (305) comprises a circumferential wall (210) made from conductive material, in particular made from metal, preferably made from stainless steel.

11. Induction cooker according to any one of the preceding claims, wherein the bottom (250) of said cooking vessel (305) is made from non-conductive material, in particular made from plastics.

12. Induction cooker according to any one of the preceding claims, wherein said conductive element (110) at least has a dimension to cover an outer contour of a bottom (250) of said cooking vessel (305) and/or where said conductive element (110) at least has a dimension to cover an outer of said outer circumferential wall (210).

## Patentansprüche

1. Induktionskocher, der ein Kochgefäß (305) und ein Basiselement (100) aufweist, wobei das Basiselement (100) mindestens ein Induktionselement (230) aufweist, in welches zum Versorgen des Induktionskochers mit elektrischer Energie ein Strom induziert werden kann, wobei zwischen dem Basiselement (100) und dem Kochgefäß (305) mindestens ein leitfähiges Element (110) angeordnet ist, das mindestens einen Teil des Kochgefäßes (305) vor Wechselmagnetfeldern abschirmt.

2. Induktionskocher nach Anspruch 1, wobei das mindestens eine leitfähige Element (110) ein ringförmiges Element ist.

3. Induktionskocher nach einem beliebigen der vorhergehenden Ansprüche, wobei das mindestens eine leitfähige Element (110) metallisch, insbesondere aus Kupfer oder Aluminium oder einem Metall mit ähnlichem ohmschen Widerstand hergestellt, ist.

4. Induktionskocher nach einem beliebigen der vorhergehenden Ansprüche, wobei das Kochgefäß (305) auf dem Basiselement (100) lösbar gelagert ist.

5. Induktionskocher nach Anspruch 4, wobei das Basiselement (100) einen Trichter (150) aufweist, um ein ausgelaufenes Fluid abzuleiten.

6. Induktionskocher nach Anspruch 4 oder 5, wobei das Basiselement (100) eine runde Form aufweist, wobei der Trichter (150) in das leitfähige Element (110) passt und an seinem Außenumfang mindestens einen und vorzugsweise drei Aussparungen (160) aufweist.

7. Induktionskocher nach einem beliebigen der vorhergehenden Ansprüche, wobei das Basiselement (100) eine Außenumfangswand (225) aufweist, wobei mindestens der Trichter (150) und das leitfähige Element (110) mit der Außenwand eine vormontierte Baugruppe bilden, wobei an der vormontierten Baugruppe eine untere Abdeckung (240) des Basiselements (100) befestigt werden kann.

8. Induktionskocher nach Anspruch 7, wobei die Außenumfangswand (225) und/oder das leitfähige Element (110) und/oder der Trichter (150) in Bezug aufeinander konzentrisch angeordnet sind.

9. Induktionskocher nach einem beliebigen der vorhergehenden Ansprüche, ferner aufweisend eine elektrische Komponente (105), die eine elektrische Verbindung zwischen dem Basiselement (100) und dem Kochgefäß (305) herstellt, insbesondere dann, wenn sich das Kochgefäß (305) in einer auf dem Basiselement (100) gelagerten Position befindet, und/oder insbesondere wobei die elektrische Komponente (105) ein trennbarer elektrischer Verbinder, vorzugsweise ein Kontaktschalter, ist.

10. Induktionskocher nach einem beliebigen der vorhergehenden Ansprüche, wobei das Kochgefäß (305) eine Umfangswand (210) aufweist, die aus leitfähigem Material, insbesondere aus Metall, vorzugsweise aus Edelstahl, hergestellt ist.

11. Induktionskocher nach einem beliebigen der vorhergehenden Ansprüche, wobei der Boden (250) des Kochgefäßes (305) aus nichtleitfähigem Material, insbesondere aus Kunststoffen, hergestellt ist.

12. Induktionskocher nach einem beliebigen der vorhergehenden Ansprüche, wobei das leitfähige Element (110) mindestens eine Erstreckung aufweist, um eine äußere Kontur eines Bodens (250) des Kochgefäßes (305) abzudecken, und/oder wobei das leitfähige Element (110) mindestens eine Erstreckung aufweist, um eine Außenseite der äußeren Umfangswand (210) abzudecken.

## Revendications

1. Appareil de cuisson à induction, comprenant un récipient de cuisson (305) et un élément de base (100), ledit élément de base (100) ayant au moins un élément d'induction (230) dans lequel un courant peut être induit pour alimenter en énergie électrique ledit appareil de cuisson à induction, au moins un élément conducteur (110) étant disposé entre ledit élément de base (100) et ledit récipient de cuisson (305), et couvrant au moins en partie ledit récipient de cuisson (305) contre les champs magnétiques oscillants.

2. Appareil de cuisson à induction selon la revendication 1, dans lequel ledit au moins un élément conducteur (110) est un élément en forme d'anneau.

3. Appareil de cuisson à induction selon l'une quelconque des revendications précédentes, dans lequel ledit au moins un élément conducteur (110) est métallique, en particulier en cuivre ou en aluminium ou en métal ayant une résistance ohmique similaire.

4. Appareil de cuisson à induction selon l'une quelconque des revendications précédentes, dans lequel ledit récipient de cuisson (305) est supporté de manière amovible sur ledit élément de base (100).

5. Appareil de cuisson à induction selon la revendication 4, dans lequel ledit élément de base (100) comprend un entonnoir (150) pour drainer un fluide renversé.

6. Appareil de cuisson à induction selon la revendication 4 ou 5, dans lequel ledit élément de base (100) présente une forme arrondie, et dans lequel l'entonnoir (150) se loge à l'intérieur dudit élément conducteur (110) et comporte au moins une, de préférence trois, découpes (160) au niveau de sa circonférence extérieure.

7. Appareil de cuisson à induction selon l'une quelconque des revendications précédentes, dans lequel ledit élément de base (100) comprend une paroi circonférentielle extérieure (225), dans lequel au moins ledit entonnoir (150) et ledit élément conducteur (110) forment un ensemble préfixé avec ladite paroi extérieure, et dans lequel un couvercle inférieur (240) de l'élément de base (100) peut être fixé audit ensemble préfixé.

8. Appareil de cuisson à induction selon la revendication 7, dans lequel ladite paroi circonférentielle extérieure (225) et/ou ledit élément conducteur (110) et/ou ledit entonnoir (150) sont disposés concentriquement les uns par rapport aux autres.

9. Appareil de cuisson à induction selon l'une quelconque des revendications précédentes, comprenant en outre un composant électrique (105) qui établit une connexion électrique entre ledit élément de base (100) et ledit récipient de cuisson (305), en particulier quand ledit récipient de cuisson (305) est dans une position supportée sur ledit élément de base (100), et/ou en particulier ledit composant électrique (105) étant un connecteur électrique pouvant être libéré, de préférence un interrupteur de contact.

10. Appareil de cuisson à induction selon l'une quelconque des revendications précédentes, dans lequel ledit récipient de cuisson (305) comprend une paroi circonférentielle (210) en matériau conducteur, en particulier en métal, de préférence en acier inoxydable.

11. Appareil de cuisson à induction selon l'une quelconque des revendications précédentes, dans lequel le fond (250) dudit récipient de cuisson (305) est en matériau non conducteur, en particulier en plastique.

12. Appareil de cuisson à induction selon l'une quelconque des revendications précédentes, dans lequel ledit élément conducteur (110) a au moins une dimension couvrant un profil extérieur d'un fond (250) dudit récipient de cuisson (305) et/ou dans lequel ledit élément conducteur (110) a au moins une dimension couvrant l'extérieur de ladite paroi circonférentielle extérieure (210).
